# EUROPEAN PATENT APPLICATION

(11) **EP 3 011 841 A1**
(43) Date of publication of application: **27.04.2016**
(21) Application number: 13887363.3
(22) Date of filing: 12.11.2013
(51) Int. Cl.: A23L 3/36, A22C 7/00, A23B 4/06, A23L 23/10

(54) **FOOD DE-CLUMPING DEVICE AND METHOD FOR MANUFACTURING DE-CLUMPED FOODS**

(30) Priority: 18.06.2013 JP 2013127133; 01.10.2013 JP 2013206529
(71) Applicant: Taiho International Co. Ltd., Saga 841-0202 (JP)
(72) Inventor: KUMISAKA Yoshiaki, Miyaki-gun Saga 841-0202 (JP)
(74) Representative: Isarpatent
(86) International application number: PCT/JP2013/080511
(87) International publication number: WO 2014/203423

(57) **Abstract**

[Solution] The present invention provides a food separating device capable of continuously performing a separating process on a frozen food and provides a separated food producing method by using the food separating device. The food separating device is provided with a first rotary body (11) which is capable of rotating around a first rotation shaft (16) and which has a first blade member (18) protruding from the first rotation shaft (16); a second rotary body (12) which is capable of rotating around a second rotation shaft (19) approximately parallel to the first rotation shaft (16) and which has a second blade member (20) that crosses on the same plane as the first blade member protruding from the second rotation shaft; and a receiving plate part (15) which is arranged below the first rotary body (11) and the second rotary body (12) and which has a predetermined interspace with distal end parts of the first blade member (18) and the second blade member (20) of the first rotary body (11) and the second rotary body (12).

## Description

### TECHNICAL FIELD

The present invention relates to a food separating device and a separated food producing method. In particular, the present invention relates to a food separating device for separating meat, etc., frozen in a minced state into pieces, and a separated food producing method by using the food separating device.

### BACKGROUND ART

In recent years, as women increasingly work outside of the home, the number of families with both parents working, and only nuclear families living together, is becoming increasingly commonplace, with the result that more and more families are using frozen food more often.

In particular, when a food produced so that small pieces having viscosity, such as minced meat and cooked rice, are aggregated, is frozen in one mass, water molecules between the small pieces are converted into ice, and the small pieces strongly adhere to each other. Thus, every time a small amount of such a food is used after it is frozen, a certain amount of labor is required because the food needs to be divided into small pieces and packed with, for example, a wrap film before it is frozen and the food needs to be thawed each time of use.

Here, as a minced food separated-state freezing device, a device described in Patent Literature 1, for example has been known. Specifically, as shown in Fig. 16, the device is configured by a mince forming means 101 for mincing a food while maintaining it at a product temperature of 0°C to -10°C, and a rotation drum 104 for rotating and stirring a minced food 102, together with dry ice snow supplied from a dry ice manufacturing machine 103, so that a separated frozen product 105 is obtained.

When the device is thus configured, the minced food enters the rotation drum in a state where the minced food is cooled after sufficiently contacting the dry ice snow, and stirred in a state where the minced food is mixed with the dry ice snow. As a result, the minced food is rapidly and uniformly frozen and a good freezing dispersion (separation) is obtained, and it is thus possible to significantly reduce the occurrence of clumps.

Further, in a food separated-state freezing device described in Patent Literature 2, as shown in Fig. 17, when a vacuum pump 110 and an opening/closing valve 111 are used to suction and exhaust the interior of a sealed food container 112 provided with an intake port during a food freezing process, a pressurized state is changed and the food 113 made of an aggregation of small pieces is frozen into a separated state.

### Citation List

### Patent Literature

Patent Literature 1: Japanese Published Unexamined Patent Application No. H7-250614
Patent Literature 2: Japanese Published Unexamined Patent Application No. 2008-116069

### Summary of Invention

### Technical Problem

However, in the invention described in the Patent Literature 1, when the minced food is frozen, a large amount of dry ice is consumed, resulting in a cost increase. Further, since a food separated-state freezing process by a batch-type rotation drum is performed, even with a large sized facility, it is not possible to perform a continuous process.

Further, in the invention described in the Patent Literature 2, since the facility is complicated and the food separated-state freezing process is performed in the sealed food container, similar to the invention described in the Patent Literature 1, it is not possible to continuously perform the food separated-state freezing process.

The present invention has been devised in view of the above problems, and an object thereof is to provide a food separating device capable of continuously performing a separating process on a frozen food and to provide a separated food producing method by using the food separating device. Solution to Problem

In order to achieve the above-described object, a food separating device according to the present invention comprises a first rotary body which is capable of rotating around a first rotation shaft and which has a first blade member protruding from the first rotation shaft, a second rotary body which is capable of rotating around a second rotation shaft approximately parallel to the first rotation shaft and which has a second blade member that crosses on the same plane as the first blade member protruding from the second rotation shaft, and a receiving plate part which is arranged below the first rotary body and the second rotary body and in which a predetermined interspace with distal end parts of the first blade member and the second blade member of the first rotary body and the second rotary body is provided.

Here, the first rotary body which is capable of rotating around the first rotation shaft and which has the first blade member protruding from the first rotation shaft, and the second rotary body which is capable of rotating around the second rotation shaft approximately parallel to the first rotation shaft and which has the second blade member that crosses on the same plane as the first blade member protruding from the second rotation shaft are used, whereby it is possible to break up a frozen food by the gap between the first blade member and the second blade member by rotation of the second blade member that crosses on the same plane as the first blade member.

Further, the receiving plate part which is arranged below the first rotary body and the second rotary body and which a predetermined interspace with distal end parts of the first blade member and the second blade member of the first rotary body and the second rotary body is provided, is included, whereby it is possible to divide the frozen food broken up by the first blade member and the second blade member between the receiving plate part and the distal end parts of the first blade member and the second blade member, into a predetermined length.

Further, in the food separating device according to the present invention, when the receiving plate part is inclined downward from the first rotary body toward the second rotary body, the frozen food in a separated state easily slides downward on the receiving plate part.

Further, in the food separating device according to the present invention, when the receiving plate part has a constant interspace with distal end parts of the first blade member and the second blade member of the first rotary body and the second rotary body, it is possible to divide the frozen food broken up by the first blade member and the second blade member into an equal length, even when the receiving plate part is inclined.

Further, the food separating device according to the present invention comprises a third rotary body which is capable of rotating in the same direction as the second rotary body around a third rotation shaft adjacent and approximately parallel to the second rotation shaft and which has a third blade member that crosses on the same plane as the second blade member protruding from the second rotation shaft.

In this case, it is possible to break up the frozen food by the gap between the second blade member and the third blade member by rotation, in the same direction, of the third blade member crossing on the same plane as the second blade member.

Further, in order to achieve the above-described object, a food separating device according to the present invention comprises, a rotary body which is capable of rotating around a rotation shaft and which has a blade member protruding approximately horizontally from the rotation shaft, a receiving plate part which has an area larger than a rotation area of which the radius is a length from the rotation shaft to a distal end of the blade member and which has a plurality of punching holes and is arranged below the rotary body, with a predetermined interspace, approximately parallel to the blade member, and a housing wall part erected at least at the same height as a height from the receiving plate part to the blade member, along a circumferential edge portion of the receiving plate part.

Here, the rotary body which is capable of rotating around the rotation shaft and which has the blade member protruding approximately horizontally from the rotation shaft, is provided, whereby it is possible to break up a frozen food by rotation of the blade member.

Further, the receiving plate part which has an area larger than a rotation area of which the radius is a length from the rotation shaft to a distal end of the blade member and which has a plurality of punching holes and is arranged below the rotary body, with a predetermined interspace, approximately parallel to the blade member, is provided, whereby it is possible to divide the frozen food broken up by the rotation of the blade member by passing through the punching holes, into a predetermined size.

Further, the housing wall part erected at least at the same height as a height from the receiving plate part to the blade member, along a circumferential edge portion of the receiving plate part, is provided, whereby it is possible to prevent the frozen food from scattering by the horizontal rotation of the blade member and it is also possible to reliably break up the frozen food in a space between the receiving plate part and the housing wall part.

Further, in the food separating device according to the present invention, when the housing wall part has a plurality of punching holes on the surface of the housing wall part, it is possible to divide the frozen food broken up by the rotation of the blade member by passing through the punching holes on the surface of the housing wall part, into a predetermined size.

Further, in the food separating device according to the present invention, when the inner diameter of the punching holes of the receiving plate part is set approximately two times the height from the receiving plate part to the blade member, it is possible to smoothly discharge the broken up frozen food remaining between the blade member and the receiving plate part through the punching holes.

Further, in the food separating device according to the present invention, when the inner diameter of the punching holes of the housing wall part is set approximately two times a distance from the distal end of the blade member to the housing wall part, it is possible to smoothly discharge the broken up frozen food remaining between the blade member and the housing wall part through the punching holes.

Further, in order to achieve the above-described object, a food separating device according to the present invention comprises, a first rotary body which is capable of rotating around a first rotation shaft and which has a first blade member protruding approximately horizontally from the first rotation shaft, a second rotary body which is capable of rotating around a second rotation shaft approximately parallel to the first rotation shaft and which has a second blade member that crosses on the same plane as the first blade member protruding from the second rotation shaft, a receiving plate part which has an area larger than a first rotation area of which the radius is a length from the first rotation shaft to a distal end of the first blade member and a second rotation area of which the radius is a length from the second rotation shaft to a distal end of the second blade member, and which has a plurality of punching holes arranged, with a predetermined interspace, below the first rotary body and the second rotary body, approximately parallel to the first blade member and the second blade member, and a housing wall part erected at least at the same height as a height from the receiving plate part to the first blade member and the second blade member, along a circumferential edge portion of the receiving plate part.

Here, the first rotary body which is capable of rotating around the first rotation shaft and which has the first blade member protruding approximately horizontally from the first rotation shaft, and the second rotary body which is capable of rotating around the second rotation shaft approximately parallel to the first rotation shaft and which has the second blade member that crosses on the same plane as the first blade member protruding from the second rotation shaft, are provided, whereby it is possible to break up a frozen food by the rotation of the second blade member crossing on the same plane as the first blade member.

Further, a receiving plate part which has an area larger than a first rotation area of which the radius is a length from the first rotation shaft to a distal end of the first blade member and a second rotation area of which the radius is a length from the second rotation shaft to a distal end of the second blade member, and which has a plurality of punching holes arranged, with a predetermined interspace, below the first rotary body and the second rotary body, approximately parallel to the first blade member and the second blade member, is provided, whereby it is possible to divide the frozen food broken up by the rotation of the first blade member and the second blade member by passing through the punching holes, into a predetermined size.

Further, the housing wall part erected at least at the same height as a height from the receiving plate part to the first blade member and the second blade member, along a circumferential edge portion of the receiving plate part, is provided, whereby it is possible to prevent the frozen food from scattering by the horizontal rotation of the first blade member and the second blade member and it is also possible to reliably break up the frozen food in a space between the receiving plate part and the housing wall part.

Further, in order to achieve the above-described object, a separated food producing method according to the present invention comprises a step of cutting a clump of frozen meat into chips to obtain a minced meat, a step of refreezing the minced meat, and a step of feeding the frozen minced meat into between a first rotary body and a second rotary body of a food separating device comprising the first rotary body which is capable of rotating around a first rotation shaft and which has a first blade member protruding from the first rotation shaft, the second rotary body which is capable of rotating around a second rotation shaft approximately parallel to the first rotation shaft and which has a second blade member that crosses on the same plane as the first blade member protruding from the second rotation shaft, and a receiving plate part which is arranged below the first rotary body and the second rotary body and which has a predetermined interspace with distal end parts of the first blade member and the second blade member of the first rotary body and the second rotary body, whereby the fed minced meat is divided into a separated state.

Here, the step of cutting a clump of frozen meat into chips to obtain a minced meat, is provided, whereby it is possible to process the frozen meat into a minced state.

Further, the step of refreezing the minced meat, is provided, whereby it is possible to maintain a frozen state of the minced meat in which the small pieces do not strongly adhere to each other while the water molecules between the small pieces remain as ice.

Further, the step of feeding the frozen minced meat into between a first rotary body and a second rotary body of a food separating device comprising the first rotary body which is capable of rotating around a first rotation shaft and which has a first blade member protruding from the first rotation shaft, the second rotary body which is capable of rotating around a second rotation shaft approximately parallel to the first rotation shaft and which has a second blade member that crosses on the same plane as the first blade member protruding from the second rotation shaft, and a receiving plate part which is arranged below the first rotary body and the second rotary body and which has a predetermined interspace with distal end parts of the first blade member and the second blade member of the first rotary body and the second rotary body, whereby the fed minced meat is divided into a separated state, is provided, whereby it is possible to break up the frozen minced meat by the gap between the first blade member and the second blade member by rotation of the second blade member that crosses on the same plane as the first blade member.

Moreover, it is possible to divide the minced meat broken up by the first blade member and the second blade member between the receiving plate part and the distal end parts of the first blade member and the second blade member, into a predetermined length.

Further, in order to achieve the above-described object, a separated food producing method according to the present invention comprises a step of cutting a clump of frozen meat into chips to obtain a minced meat, a step of refreezing the minced meat, a step of feeding the frozen minced meat into a rotary body of a food separating device comprising the rotary body which is capable of rotating around a rotation shaft and which has a blade member protruding approximately horizontally from the rotation shaft, a receiving plate part which has an area larger than a rotation area of which the radius is a length from the rotation shaft to a distal end of the blade member and which has a plurality of punching holes and is arranged below the rotary body, with a predetermined interspace, approximately parallel to the blade member, and a housing wall part erected at least at the same height as a height from the receiving plate part to the blade member, along a circumferential edge portion of the receiving plate part, whereby the fed minced meat is divided into a separated state, and a step of discharging the minced meat divided into a separated state by the blade member of the rotary body, from a plurality of punching holes of the receiving plate part.

Here, the step of cutting a clump of frozen meat into chips to obtain a minced meat, is provided, whereby it is possible to process the frozen meat into a minced state.

Further, the step of refreezing the minced meat, is provided, whereby it is possible to maintain a frozen state of the minced meat in which the small pieces do not strongly adhere to each other while the water molecules between the small pieces remain as ice.

Further, through the step of dividing a minced frozen food into separated pieces when the frozen minced meat is fed into a rotary body of a food separating device comprising the rotary body which is capable of rotating around a rotation shaft and which has a blade member protruding approximately horizontally from the rotation shaft, a receiving plate part which has an area larger than a rotation area of which the radius is a length from the rotation shaft to a distal end of the blade member and which has a plurality of punching holes and is arranged below the rotary body, with a predetermined interspace, approximately parallel to the blade member, and a housing wall part erected at least at the same height as a height from the receiving plate part to the blade member, along a circumferential edge portion of the receiving plate part, whereby it is possible to break up the frozen minced meat by the rotation of the blade member.

Moreover, it is possible to divide the frozen food broken up by the rotation of the blade member by passing through the punching holes of the receiving plate part, into a predetermined size, and when the housing wall part is provided, it is possible to prevent the frozen food from scattering by the horizontal rotation of the blade member and it is also possible to reliably break up the frozen food in a space between the receiving plate part and the housing wall part.

Further, in the separated food producing method according to the present invention, when the minced meat is refrozen at -10°C or less, it is possible to maintain the minced meat at -4°C or less in consideration of frictional heat at the time of the break up. As a result, it is possible to maintain a frozen state of the minced meat in which the small pieces do not strongly adhere to each other while the water molecules between the small pieces remain as ice.

### EFFECTS OF THE INVENTION

In the food separating device according to the present invention, it is possible to continuously perform a separating process on a frozen food.

Further, in the separated food producing method according to the present invention, it is possible to continuously produce a frozen separated food.

### BRIEF DESCRIPTION OF DRAWINGS

Fig. 1 is a schematic front view for describing one example of a food separating device to which the present invention is applied.
Fig. 2 is a schematic plane view for describing one example of the food separating device to which the present invention is applied.
Fig. 3 is a schematic view for describing one example of an essential part of a crusher part in the food separating device to which the present invention is applied.
Fig. 4 is a schematic front view for describing one example of a frozen minced meat clump housing part in the food separating device to which the present invention is applied.
Fig. 5 is a schematic view for describing one example of a usage state in the food separating device to which the present invention is applied.
Fig. 6 is a schematic side view for describing a modification of the food separating device to which the present invention is applied.
Figs. 7 are a schematic plane view (A) for describing a modification of the food separating device to which the present invention is applied, and an expanded schematic diagram (B) showing an essential part for describing a drive mechanism of a first rotary body, a second rotary body, and a third rotary body in the modification of the food separating device to which the present invention is applied.
Figs. 8 are a schematic view (A) for describing a base in the modification of the food separating device to which the present invention is applied, and an expanded schematic diagram (B) showing an essential part for describing an essential part of the base in the modification of the food separating device to which the present invention is applied.
Fig. 9 is a schematic side view for describing one example obtained when a rotary body in another example of the food separating device to which the present invention is applied is a single unit.
Fig. 10 is a schematic plane view for describing one example obtained when a rotary body in another example of the food separating device to which the present invention is applied is a single unit.
Fig. 11 is a schematic view for describing one example of a rotation mechanism obtained when a rotary body in another example of the food separating device to which the present invention is applied is a single unit.
Figs. 12 are a schematic side view (A) for describing a modification when a rotary body in another example of the food separating device to which the present invention is applied is a single unit, and a schematic plane view (B) for describing a modification when a rotary body in another example of the food separating device to which the present invention is applied is a single unit.
Fig. 13 is a schematic side view for describing one example obtained when there are a plurality of rotary bodies in another example of the food separating device to which the present invention is applied.
Fig. 14 is a schematic plane view for describing one example obtained when there are a plurality of rotary bodies in another example of the food separating device to which the present invention is applied.
Fig. 15 is a flowchart for describing one example of steps in a separated food producing method to which the present invention is applied.

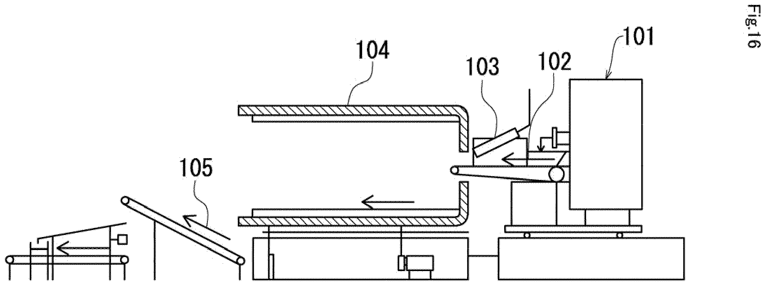

Fig. 16 is a schematic view for describing one example of a conventional separated-state freezing device.

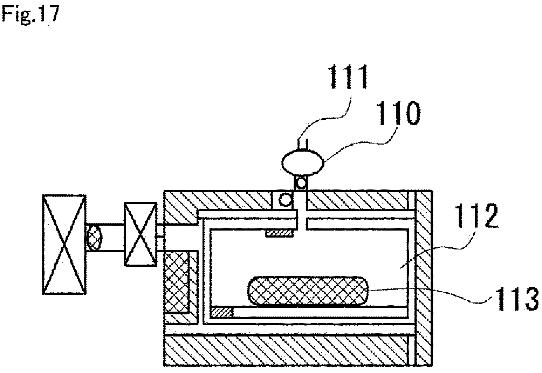

Fig. 17 is a schematic view for describing another example of a conventional separated-state freezing device.

### DESCRIPTION OF EMBODIMENTS

With reference to the drawings, embodiments of the present invention will be described below.

### <First Embodiment>

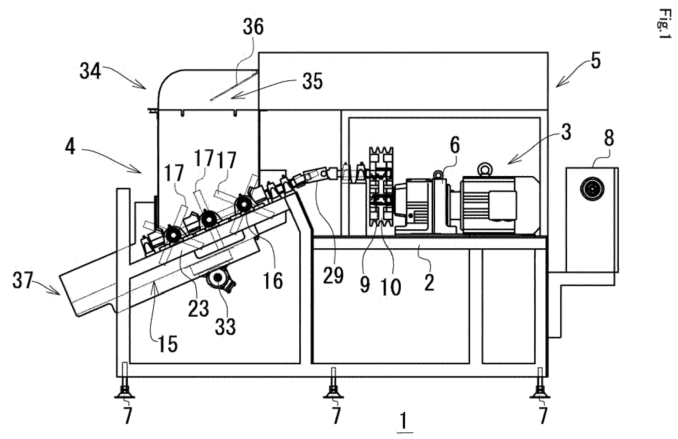

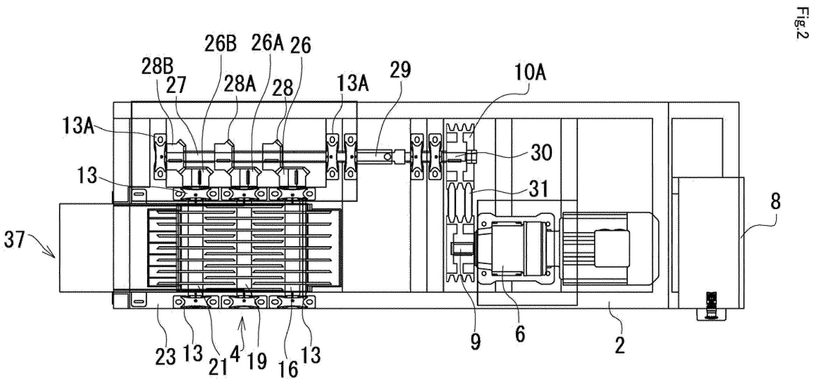

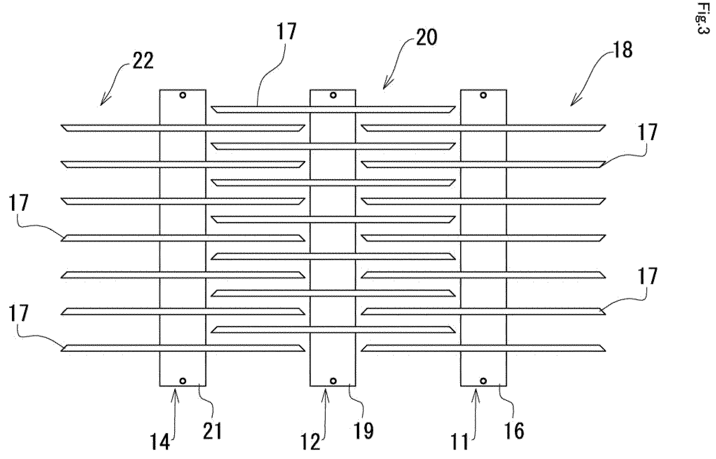

Fig. 1 is a schematic front view for describing one example of a food separating device to which the present invention is applied, Fig. 2 is a schematic plane view for describing one example of the food separating device to which the present invention is applied, and Fig. 3 is a schematic view for describing one example of an essential part of a crusher part in the food separating device to which the present invention is applied.

A food separating device 1 shown here is configured by a base 2, a drive part 3 mounted on the base 2, a crusher part 4 adjacent to the base 2, and a frozen minced meat clump housing part 5 arranged above the base 2.

Here, the base 2 is configured to be assembled at a predetermined height by steel pipes such as stainless steel. Further, a caster 7 capable of adjusting the height is attached below the base 2.

Further, the drive part 3 is configured by an electric motor 6 and a control part 8 in which an ON/OFF switch (not shown) and an inverter control circuit (not shown), for example, are incorporated. Moreover, a pulley 10 is attached to a drive shaft 9 of the electric motor 6.

Further, the crusher part 4 is configured such that a first rotary body 11, a second rotary body 12, and a third rotary body 14 are arranged adjacently to the base 2 in this order, as shown in Fig. 3, and below the first rotary body 11, the second rotary body 12, and the third rotary body 14, a receiving plate part (not shown in Fig. 3) is arranged.

Here, the first rotary body 11 is configured such that a first blade member 18 configured by a blade plate part 17 having a thickness of approximately 6 mm and being arranged to cross in the direction orthogonal to the first rotation shaft 16 is attached at intervals of approximately 18 mm along a longitudinal direction of the first rotation shaft 16.

Further, in the second rotary body 12, a second rotation shaft 19 is arranged approximately parallel to the first rotation shaft 16. Moreover, a second blade member 20 is arranged which is configured by the blade plate part 17 having a thickness of approximately 6 mm and being arranged to cross in the direction orthogonal to the second rotation shaft 19.

Configuration is such that the second blade members 20 are attached at intervals of approximately 18 mm to be shifted relative to the position of the first blade members 18 along a longitudinal direction of the second rotation shaft 19 so that the second blade members 20 cross on the same plane as the first blade members 18.

Further, in the third rotary body 14, a third rotation shaft 21 is arranged adjacently and approximately parallel to the second rotation shaft 19. Moreover, a third blade member 22 is arranged which is configured by the blade plate part 17 being arranged to cross in the direction orthogonal to the third rotation shaft 21 and having a thickness of approximately 6 mm.

Configuration is such that the third blade members 22 are attached at intervals of approximately 18 mm to be shifted relative to the position of the second blade members 20 along a longitudinal direction of the third rotation shaft 21 so that the third blade members 22 cross on the same plane as the second blade members 20.

With such a configuration, the blade plate parts 17 of the first blade member 18 and the second blade member 20 rotate to cross each other on the same plane. Further, the blade plate parts 17 of the second blade member 20 and the third blade member 22 rotate to overlap each other on the same plane.

Here, as shown in Fig. 2, the first rotation shaft 16, the second rotation shaft 19, and the third rotation shaft 21 are axially supported rotatably by a bearing 13 of which the both side ends are attached to a support frame 23.

The support frame 23 is configured to be supported to have an inclination angle of about 20 to 30 degrees toward the distal end, and has a caster 7 attached to a lower end at the distal end side of the support frame 23 (see Fig. 1).

Moreover, while one ends of the first rotation shaft 16, the second rotation shaft 19, and the third rotation shaft 21 are inserted through the bearing 13, the distal ends thereof are attached with master bevel gears (26, 26A, 26B).

Further, near the shaft of the master bevel gears (26, 26A, 26B) of the first rotation shaft 16, the second rotation shaft 19, and third rotation shaft 21, an interlocking shaft 27 is arranged to form a right angle relative to the shaft direction.

The interlocking shaft 27 has both side ends being axially supported rotatably by a bearing 13A attached to the distal end and the base end sides of the support frame 23.

Moreover, to the interlocking shaft 27, slave bevel gears (28, 28A, 28B) meshed with the master bevel gears (26, 26A, 26B) of the first rotation shaft 16, the second rotation shaft 19, and the third rotation shaft 21 are attached.

Thus, configuration is such that when the slave bevel gears (28, 28A, 28B) are meshed with the master bevel gears (26, 26A, 26B), the first rotation shaft 16, the second rotation shaft 19, and the third rotation shaft 21 are capable of rotating by the drive rotation of the interlocking shaft 27.

Further, the one end, at the first rotary body 11 side, of the interlocking shaft 27 is configured, while being inserted through the bearing 13A, to be linked with a rotation shaft 30 of a pulley 10A, via a universal joint 29.

Further, between the rotation shaft 30 of the pulley 10A and the drive shaft 9 of the electric motor 6, which are in parallel to each other, an interlocking belt 31 is linked. With the interlocking belt 31, the interlocking shaft 27 attached to the rotation shaft 30 of the pulley 10A, via the universal joint 29, is configured to be driven to rotate.

Here, configuration is such that the slave bevel gears (28, 28A, 28B) are meshed with the master bevel gears (26, 26A, 26B) of the first rotation shaft 16, the second rotation shaft 19, and the third rotation shaft 21, respectively, so that the first rotation shaft 16, the second rotation shaft 19, and the third rotation shaft 21 face the same direction.

Further, a receiving plate part 15 is configured to be attached such that a distance to the blade plate parts 17 of the first rotary body 11, the second rotary body 12, and the third rotary body 14 is approximately 15 mm.

Thus, the receiving plate part 15 is configured to be inclined from the first rotary body 11 toward the third rotary body 14.

Further, on a bottom surface of the receiving plate part 15, a vibrator 33 for exciting a vibration on a whole surface of the receiving plate part 15 is attached.

Further, in the support frame 23, a cover part 34 is erected in a manner so as to surround the first rotary body 11, the second rotary body 12, the third rotary body 14, and the receiving plate part 15.

The cover part 34 is configured such that a feeding port 35 for feeding frozen minced meat is provided at a position to face the frozen minced meat clump housing part 5 at the upper end of the cover part 34.

Moreover, configuration is such that the feeding port 35 is attached with a lid part 36 in a manner that only the upper end thereof is coupled and pivotally supported, and when the feeding port 35 is pushed, the feeding port 35 is opened.

Further, configuration is such that at a discharge side of the receiving plate part 15 of the cover part 34, a separated-meat discharge port 37 is formed, from which separated frozen meat is discharged.

Configuration is such that when the cover part 34 having such a configuration is provided, the minced meat separated by the first rotary body 11, the second rotary body 12, and the third rotary body 14 is not scattered.

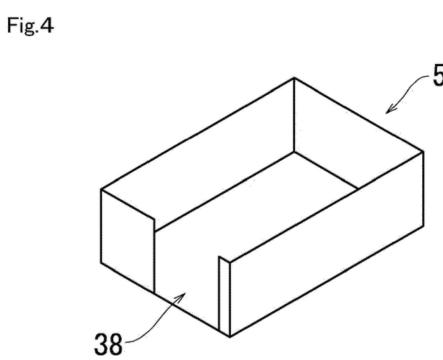

Further, configuration is such that as shown in Fig. 4, the frozen minced meat clump housing part 5 has a box shape of which the upper end is open, and at a position facing the feeding port 35 of the cover part 34, a discharge port 38 is provided.

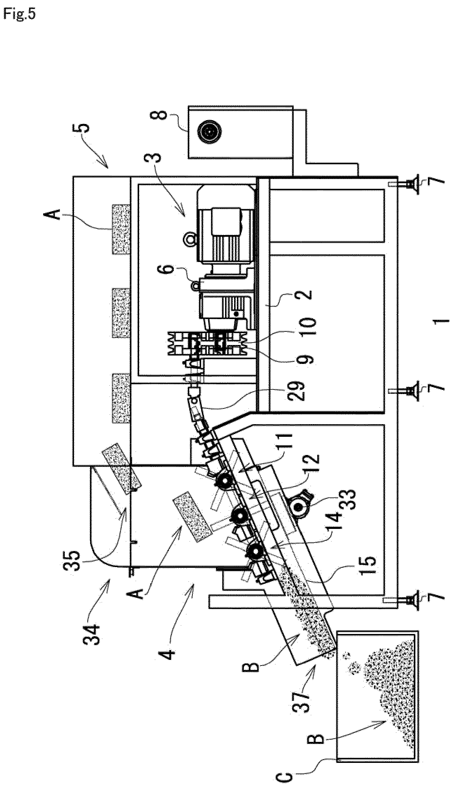

In the food separating device of the present invention, as shown in Fig. 5, a minced meat clump A frozen at around -10°C is taken out from a freezer (not shown) and housed in the frozen minced meat clump housing part 5, for example.

In such a state, the electric motor 6 is driven to drive and rotate the pulley 10A capable of interlocking, via the interlocking belt 31, with the pulley 10. As a result, as shown in the foregoing Fig. 2, when the interlocking shaft 27 attached, via the universal joint 29, to the rotation shaft 30 of the pulley 10A is driven and rotated, the slave bevel gears (28, 28A, 28B) are similarly driven and rotated.

Moreover, when the master bevel gears (26, 26A, 26B) meshed with the slave bevel gears (28, 28A, 28B) are similarly rotated, the first rotation shaft 16, the second rotation shaft 19, and the third rotation shaft 21 are driven and rotated.

Here, the first rotary body 11 and the second rotary body 12 rotate in a direction to face each other. Further, the third rotary body 14 rotates in the same direction as the second rotary body 12.

In this way, while the first rotary body 11, the second rotary body 12, and the third rotary body 14 are driven and rotated, the minced meat clump A housed in the frozen minced meat clump housing part 5 is fed into the feeding port 35 of the cover part 34 from the discharge port 38.

The minced meat clump A dropped from the feeding port 35 is broken up as a result of the blade plate parts 17 of the first rotary body 11, the second rotary body 12, and the third rotary body 14 being rotated to cross each other on the same planes at intervals of approximately 6 mm.

Here, the broken up minced meat clump A is pushed out onto the receiving plate part 15 at a thickness of about 6 mm from between the blade plate parts 17 of the first rotary body 11, the second rotary body 12, and the third rotary body 14.

Moreover, a separated meat B pushed out onto the receiving plate part 15 is divided into pieces having a length of about 10 mm by gaps between the blade plate parts 17 of the first rotary body 11, the second rotary body 12, and the third rotary body 14, and the receiving plate part 15.

The separated meat B thus divided is moved to the discharge side of the receiving plate part 15 as a result of the first rotary body 11, the second rotary body 12, and the third rotary body 14 rotating toward the discharge direction, the receiving plate part 15 being inclined, and the vibrator 33 vibrating.

Thus, the separated meat B divided into a size having a thickness of about 6 mm and a length of about 10 mm is pushed out sequentially from the receiving plate part 15 and collected from the separated-meat discharge port 37 into a collection container C for refreezing.

In the food separating device of the present invention having such a configuration, when a minced meat clump in a frozen state is sequentially fed between the first rotary body and the second rotary body so that it is possible to continuously divide the meat clump into a separated state.

Further, it is possible to automatically break up in a short period of time, and thus, it is possible to separate a food while the food is frozen and it is not necessary to newly provide a freezing means, resulting in an effective separated food.

### <Modification of First Embodiment>

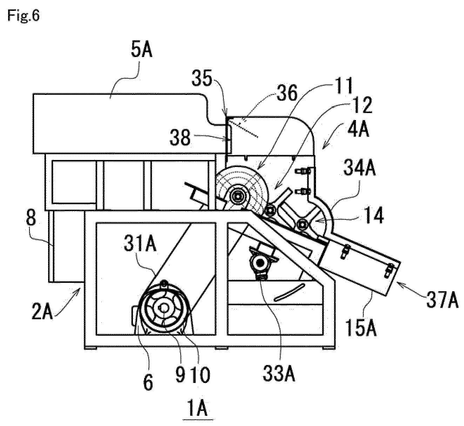

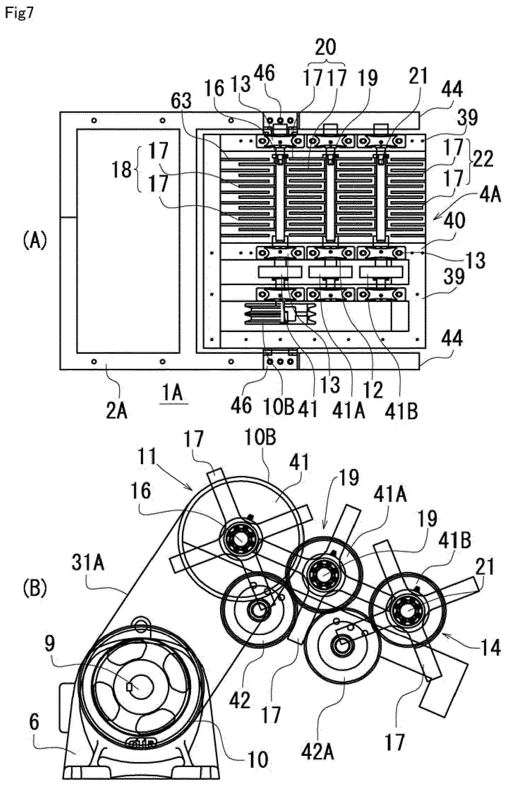

Fig. 6 is a schematic side view for describing a modification of the food separating device to which the present invention is applied, Fig. 7(A) is a schematic plane view for describing a modification of the food separating device to which the present invention is applied, and Fig. 7(B) is an expanded schematic diagram of showing an essential part for describing a drive mechanism of a first rotary body, a second rotary body, and a third rotary body in the modification of the food separating device to which the present invention is applied.

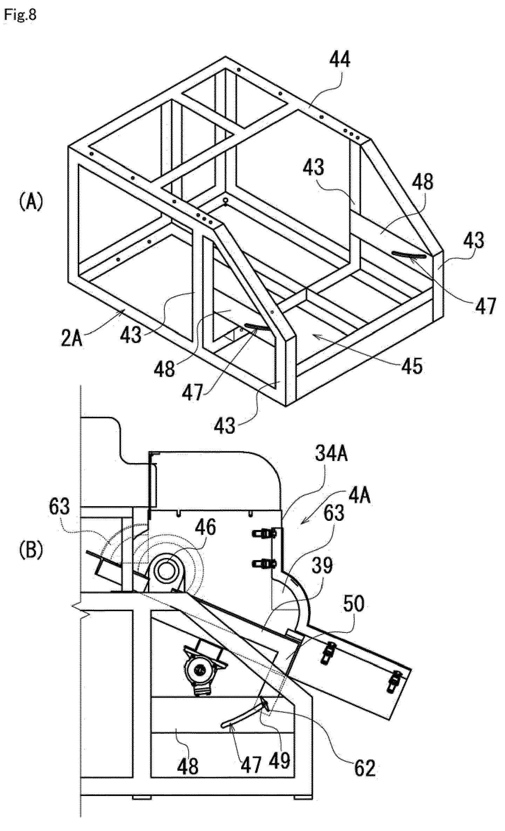

Further, Fig. 8(A) is a schematic view for describing one example of a base in the modification of the food separating device to which the present invention is applied, and Fig. 8(B) is an expanded schematic diagram of showing an essential part of the base in the modification of the food separating device to which the present invention is applied.

A food separating device 1A shown here is configured by a base 2A, the electric motor 6 mounted on the base 2A, a frozen minced meat clump housing part 5A arranged at an upper end of the base 2A, and a crusher part 4A arranged adjacently to the frozen minced meat clump housing part 5A.

Further, the electric motor 6 is configured to be driven by the control part 8 in which an ON/OFF switch (not shown) and an inverter control circuit (not shown) mounted on the base 2A, for example, are incorporated. Moreover, the pulley 10 is attached to the drive shaft 9 of the electric motor 6.

Here, in the crusher part 4A, the first rotary body 11, the second rotary body 12, and the third rotary body 14 are arranged in a frame 39.

The first rotary body 11 is configured such that the first blade member 18 configured by the blade plate part 17 having a thickness of approximately 6 mm and being arranged to cross in the direction orthogonal to the first rotation shaft 16 is attached at intervals of approximately 18 mm along a longitudinal direction of the first rotation shaft 16.

Further, in the second rotary body 12, the second rotation shaft 19 is arranged approximately parallel to the first rotation shaft 16. Moreover, the second blade member 20 is arranged which is configured by the blade plate part 17 having a thickness of approximately 6 mm and being arranged to cross in the direction orthogonal to the second rotation shaft 19.

Configuration is such that the second blade members 20 are attached at intervals of approximately 18 mm to be shifted relative to the position of the first blade members 18 along a longitudinal direction of the second rotation shaft 19 so that the second blade members 20 cross on the same plane as the first blade members 18.

Further, in the third rotary body 14, the third rotation shaft 21 is arranged adjacently and approximately parallel to the second rotation shaft 19. Moreover, the third blade member 22 is arranged which is configured by the blade plate part 17 being arranged to cross in the direction orthogonal to the third rotation shaft 21 and having a thickness of approximately 6 mm.

Configuration is such that the third blade members 22 are attached at intervals of approximately 18 mm to be shifted relative to the position of the second blade members 20 along a longitudinal direction of the third rotation shaft 21 so that the third blade members 22 cross on the same plane as the second blade members 20.

With such a configuration, the blade plate parts 17 of the first blade member 18 and the second blade member 20 rotate to cross each other on the same plane. Further, the blade plate parts 17 of the second blade member 20 and the third blade member 22 rotate to overlap each other on the same plane.

Further, the first rotation shaft 16, the second rotation shaft 19, and the third rotation shaft 21 are axially supported rotatably by the bearing 13 of which the both side ends are attached to the frame 39 and a support frame 40.

Here, while the first rotation shaft 16, the second rotation shaft 19, and the third rotation shaft 21 are inserted through the bearing 13 attached at the support frame 40, the distal ends of these shafts are attached with spur gears (41, 41A, 41B).

Further, configuration is such that a slave spur gear 42 is meshed between the spur gear 41 and the spur gear 41A, and a slave spur gear 42A is meshed between the spur gear 41A and the spur gear 41B.

Moreover, a pulley 10B for driving and rotating the spur gear 41 is attached to the first rotation shaft 16 in an integrated manner.

Thus, configuration is such that when the slave spur gears (42, 42A) are meshed with the spur gears (41, 41A, 41B), the first rotation shaft 16, the second rotation shaft 19, and the third rotation shaft 21 are capable of rotating by the drive rotation of the pulley 10B.

Further, the base 2A is assembled in a rectangular shape by an angle member 43 and inclined downward from an upper end 44, and has an opening part 45 having approximately the same width as the crusher part 4A (see Fig. 8(A)).

Moreover, between the angle members (43, 43) at the both sides of the opening part 45, an angle adjustment plate part 48 in which a long hole 47 in a circular arc shape is provided, is attached.

Here, while the frame 39 of the crusher part 4A is inserted into an opening part (not shown), the frame 39 is pivotably attached, relative to the upper end 44 of the base 2A, by a linkage member 46 (see Fig. 7(A)).

Further, configuration is such that below the frame 39 of the crusher part 4A, a distal end part 49 in a screw shape is inserted in a loosely penetrating manner into the long hole 47 of the angle adjustment plate part 48, and a support member 50 into which a butterfly nut member 62 is screwed is attached at the approximately right angle (see Fig. 8(B)).

Thus, when the distal end part 49 of the support member 50 is moved inside the long hole 47, it is possible to freely adjust the inclination of the crusher part 4A around the linkage member 46.

Here, the pulley 10 attached to the drive shaft 9 of the electric motor 6 mounted on the base 2A and the pulley 10B attached to the first rotation shaft 16 are linked by an elastic interlocking belt 31A such as rubber (see Fig. 7(B)).

Further, below the crusher part 4A, a receiving plate part 15A is arranged. The receiving plate part 15A is configured to be attached such that a distance to the blade plate parts 17 of the first rotary body 11, the second rotary body 12, and the third rotary body 14 is approximately 15 mm (see Fig. 6).

Thus, the receiving plate part 15A is configured to be inclined from the first rotary body 11 toward the third rotary body 14.

Further, on a bottom surface of the receiving plate part 15A, a vibrator 33A for exciting a vibration on a whole surface of the receiving plate part 15A is attached (see Fig. 6).

Further, in the frame 39, a cover part 34A is arranged in a manner so as to surround the first rotary body 11, the second rotary body 12, the third rotary body 14, and the receiving plate part 15A (see Fig. 6).

The cover part 34A is attached at a position to face the discharge port 38 of the frozen minced meat clump housing part 5A, where the feeding port 35 capable of being inserted into a communicating shape into the discharge port 38 is opened (see Fig. 6).

Moreover, at a position to face the first rotary body (not shown) of the cover part 34A and a position to face the third rotary body (not shown) thereof, a fixed blade part 63 is arranged (see Fig. 7(A) and Fig. 8(B)).

The fixed blade part 63 is configured to be attached by being shifted relative to the positions of the first blade member 18 and the third blade member 22 to cross on the same plane as the first blade member 18 and the third blade member 22 (see Fig. 7(A)).

Thus, similarly to the gap between the blade plate parts 17 of the first rotary body 11, the second rotary body 12, and the third rotary body 14, it is possible to provide a gap of approximately 6 mm between the fixed blade part 63 of the cover part 34A, and the third blade member 22 and the first blade member 18.

Moreover, configuration is such that the feeding port 35 of the cover part 34A is attached with a lid part 36 of which only the upper end is coupled and pivotally supported, and when the discharge port 38 of the frozen minced meat clump housing part 5A is inserted into the feeding port 35, it is possible to open the feeding port 35 (see Fig. 6)).

Further, configuration is such that at a third rotary body 14 side of the cover part 34A, a separated-meat discharge port 37A is formed, from which a separated frozen meat is discharged.

Configuration is such that when the cover part 34A having such a configuration is provided, the minced meat separated by the first rotary body 11, the second rotary body 12, and the third rotary body 14 is not scattered.

In the food separating device 1A of the present invention, a minced meat clump (not shown) frozen at around -10°C, for example, is housed in the frozen minced meat clump housing part 5A.

In such a state, the electric motor 6 is driven to drive and rotate the pulley 10B capable of interlocking, via the interlocking belt 31A, with the pulley 10. Thus, when the spur gear 41 of the first rotary body 11 is driven and rotated, the slave spur gear 42 is similarly driven and rotated.

Moreover, the spur gear 41A of the second rotary body 12 meshed with the slave spur gear 42, the slave spur gear 42A meshed with the spur gear 41A, and the spur gear 41B of the third rotary body 14 meshed with the slave spur gear 42A are driven and rotated.

Thus, the first rotary body 11, the second rotary body 12, and the third rotary body 14 are rotated in the same direction.

In this way, while the first rotary body 11, the second rotary body 12, and the third rotary body 14 are driven and rotated, the minced meat clump housed in the frozen minced meat clump housing part 5A is fed into the feeding port 35 of the cover part 34A from the discharge port 38.

The minced meat clump dropped from the feeding port 35 is broken up as a result of the blade plate parts 17 of the first rotary body 11, the second rotary body 12, and the third rotary body 14 being rotated to cross each other on the same planes at intervals of approximately 6 mm.

Here, the broken up minced meat clump is pushed out onto the receiving plate part 15A at a thickness of about 6 mm from between the blade plate parts 17 of the first rotary body 11, the second rotary body 12, and the third rotary body 14.

Moreover, a separated meat (not shown) pushed out onto the receiving plate part 15A is divided into pieces having a length of about 10 mm by gaps between the blade plate parts 17 of the first rotary body 11, the second rotary body 12, and the third rotary body 14, and the receiving plate part 15A.

The separated meat thus divided is moved to the discharge side of the receiving plate part 15A as a result of the first rotary body 11, the second rotary body 12, and the third rotary body 14 rotating toward the discharge direction, the receiving plate part 15A being inclined, and the vibrator 33A vibrating.

Thus, the separated meat divided into a size having a thickness of about 6 mm and a length of about 10 mm is pushed out sequentially from the receiving plate part 15A and collected from the separated-meat discharge port 37A into a collection container (not shown) for refreezing.

In the food separating device of the present invention having such a configuration, when a minced meat clump in a frozen state is sequentially fed between the first rotary body, the second rotary body, and the third rotary body so that it is possible to continuously divide the fed clump into a separated state.

Further, it is possible to automatically break up the fed clump in a short period of time, and thus, it is possible to separate a food while the food is frozen and it is not necessary to newly provide a freezing means, resulting in an effective separated food.

It is noted that in the <First Embodiment> and the <Modification of First Embodiment>, the receiving plate part is inclined downward from the first rotary body toward the third rotary body, however, the inclination may not necessarily be needed.

For example, the receiving plate part may be horizontal, however, the receiving plate part is desirably inclined in view of smooth discharge of the frozen minced meat in a separated state.

Further, in the <First Embodiment> and the <Modification of First Embodiment>, the inclined receiving plate part has a constant interspace with distal end parts of the first blade member, the second blade member, and the third blade member of the first rotary body, the second rotary body, and the third rotary body; however, the constant interspace may not necessarily be provided with the distal end parts of the first blade member, the second blade member, and the third blade member.

For example, only the receiving plate part may be inclined; however, the constant interspace is desirably provided in view of dividing the minced meat into a constant length by the interspace between the receiving plate part and the distal end parts of the first blade member, the second blade member, and the third blade member.

Further, in the <First Embodiment> and the <Modification of First Embodiment>, the vibrator part for vibrating the receiving plate part is provided; however, the vibrator part may not necessarily be provided.

However, to ensure that the inclined receiving plate part is vibrated to slide the minced meat in a separated state toward the discharge side, the vibrator part is desirably provided.

Further, in the <First Embodiment> and the <Modification of First Embodiment>, the third rotation shaft is provided which is capable of rotating in the same direction as the second rotary body around the third rotation shaft adjacent and approximately parallel to the second rotation shaft, and which has the third blade member that crosses on the same plane as the second blade member protruding from the second rotation shaft; however, the third rotary body may not necessarily be provided.

For example, it may not be necessary to provide the third rotary body as long as it is possible to ensure that the frozen minced meat is fed between the first rotary body and the second rotary body.

However, when a large amount of frozen minced meat is continuously fed, the third rotary body is desirably provided in order to ensure that the frozen minced meat is separated.

Further, in the <First Embodiment> and the <Modification of First Embodiment>, description is given where a food to be separated is minced meat; however, the food to be separated may not necessarily be minced meat.

For example, any optional food, which is a frozen food such as cooked rice and beans frozen in an aggregate state that needs to be separated, may be applicable.

### <Second Embodiment>

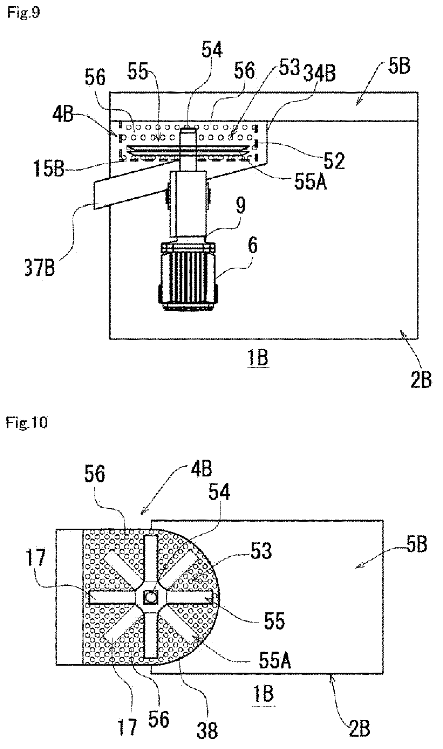

Fig. 9 is a schematic side view for describing one example obtained when a rotary body in another example of the food separating device to which the present invention is applied is a single unit, and Fig. 10 is a schematic plane view for describing one example obtained when a rotary body in another example of the food separating device to which the present invention is applied is a single unit.

A food separating device 1B shown here is configured by a base 2B, the electric motor 6 mounted on the base 2B, a frozen minced meat clump housing part 5B arranged at an upper end of the base 2B, and a crusher part 4B arranged adjacently to the frozen minced meat clump housing part 5B.

Here, in the crusher part 4B, a housing wall part 52 of a cylindrical shape is arranged below along the discharge port 38 of the frozen minced meat clump housing part 5B. Moreover, a rotary body 53 is arranged approximately horizontally inside the housing wall part 52, and below the rotary body 53, a receiving plate part 15B is arranged.

Further, the rotary body 53 is configured such that a rotation shaft 54 is directly connected vertically to the drive shaft 9 of the electric motor 6 arranged below the receiving plate part 15B.

The rotation shaft 54 is inserted in a loosely penetrating manner into an approximate center portion of the receiving plate part 15B, and the height of the upper end of the rotation shaft 54 is set at approximately the same height as the housing wall part 52.

Moreover, configuration is such that blade members (55, 55A) configured by the blade plate parts 17 projected approximately horizontally are arranged at the upper and lower positions of the rotation shaft 54.

Here, configuration is such that a plurality of punching holes 56 are provided on the receiving plate part 15B and the housing wall part 52.

The inner diameter of the punching holes 56 is approximately two times the height from the receiving plate part 15B to the blade member 55A, in the case of the receiving plate part 15B. Further, in the case of the housing wall part 52, configuration is such that the inner diameter is approximately two times a distance from the distal end of the blade plate part 17 of the blade members (55, 55A) to the housing wall part 52.

Specifically, when the distance between the blade plate parts 17 of the blade members (55, 55A) and the distance between the receiving plate part 15B and the blade plate parts 17 of the blade member 55A are 10 mm, the inner diameter of the punching holes 56 of the receiving plate part 15B is approximately 20 mm.

Further, when a distance between the distal end of the blade plate part 17 of the blade members (55, 55A) and the housing wall part 52 is 10 mm, the inner diameter of the punching holes 56 of the housing wall part 52 is approximately 20 mm.

Further, a cover part 34B is arranged to surround the receiving plate part 15B and the housing wall part 52. The cover part 34B is arranged to have an interval of 10 mm or more with the receiving plate part 15B and the housing wall part 52, and below the receiving plate part 15B, an inclined separated-meat discharge port 37B is formed.

Configuration is such that when the cover part 34B having such a configuration is arranged, the minced meat separated by the rotary body 53 is not scattered from the punching holes 56 of the receiving plate part 15B and the housing wall part 52.

Further, the blade members (55, 55A) are mechanisms to rotate in the respective opposite direction.

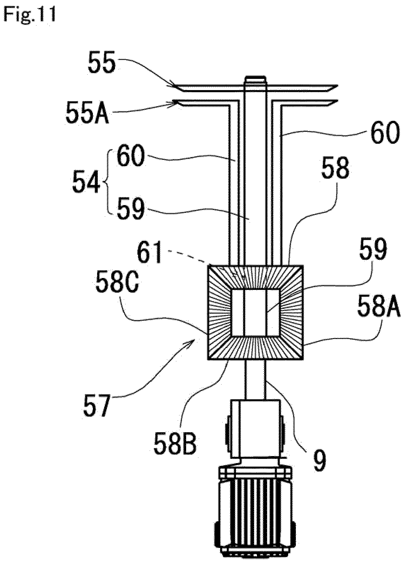

Specifically, as shown in Fig. 11, a forward and backward rotation gear part 57 is linked to the drive shaft 9 of the electric motor 6. The forward and backward rotation gear part 57 is configured by four planetary gears (58, 58A, 58B, 58C) meshed with one another at an angle of 90 degrees.

Moreover, the forward and backward rotation gear part 57 is linked with the rotation shaft 54 configured by a forward rotation shaft 59 rotating in the forward direction and a backward rotation shaft 60 rotating in the backward direction, and from the forward rotation shaft 59, a blade member 55 is projected horizontally, and from the backward rotation shaft 60, the blade member 55A is projected horizontally.

Here, the forward rotation shaft 59 is configured to be linked to the planetary gear 58B of the forward and backward rotation gear part 57 and to be inserted in a loosely penetrating manner into a through-hole 61 arranged on a central axis of the planetary gear 58.

Further, configuration is such that when the backward rotation shaft 60 is linked, the forward rotation shaft 59 is externally inserted into the planetary gear 58 of the forward and backward rotation gear part 57.

Here, when the planetary gear 58B is driven and rotated, the forward rotation shaft 59 is rotated in the forward direction, and the planetary gears 58A and 58C meshed with the planetary gear 58B are rotated in the respective opposite direction.

Thus, the planetary gear 58B meshed with the planetary gears 58A and 58C is rotated in the opposite direction of the planetary gear 58B.

When the food separating device 1B is thus configured, the blade member 55 projected from the forward rotation shaft 59 and the blade member 55A projected from the backward rotation shaft 60 are rotated in the respective opposite direction.

In the food separating device 1B of the present invention, a minced meat clump (not shown) frozen at, for example, around -10°C is housed in the frozen minced meat clump housing part 5B.

In such a state, when the electric motor 6 is driven, the blade member 55 projected from the forward rotation shaft 59 and the blade member 55A projected from the backward rotation shaft 60 are rotated in the respective opposite direction.

When the rotary body 53 is thus driven and rotated, the minced meat clump (not shown) housed in the frozen minced meat clump housing part 5B is fed into the housing wall part 52 (see Fig. 9).

The minced meat clump dropped into the housing wall part 52 is broken up as a result of the blade plate parts 17 having intervals of approximately 10 mm of the rotary body 53 being rotated in the respective opposite direction.

Here, the broken up minced meat clump is pushed out, at a thickness of about 10 mm, onto the receiving plate part 15B and housing wall part 52 surfaces.

Moreover, a separated meat (not shown) pushed out onto the receiving plate part 15B and housing wall part 52 surfaces is divided into pieces having a length of about 10 mm by gaps between the blade plate parts 17 of the rotary body 53, and the receiving plate part 15B and the housing wall part 52.

The separated meat thus divided is discharged into the cover part 34B through the punching holes 56 arranged on the receiving plate part 15B and the housing wall part 52. Further, the separated meat discharged into the cover part 34B is collected into a collection container (not shown) from the separated-meat discharge port 37B for refreezing.

In the food separating device 1B of the present invention having such a configuration, when a minced meat clump in a frozen state is sequentially fed onto the rotary body, it is possible to continuously divide the fed clump into a separated state.

Further, when the rotary body is installed horizontally, it is possible to realize reduction in size of a whole device.

Further, it is possible to automatically break up in a short period of time, and thus, it is possible to separate a food while the food is frozen and it is not necessary to newly provide a freezing means, resulting in an effectively separated food.

### <Modification of Second Embodiment>

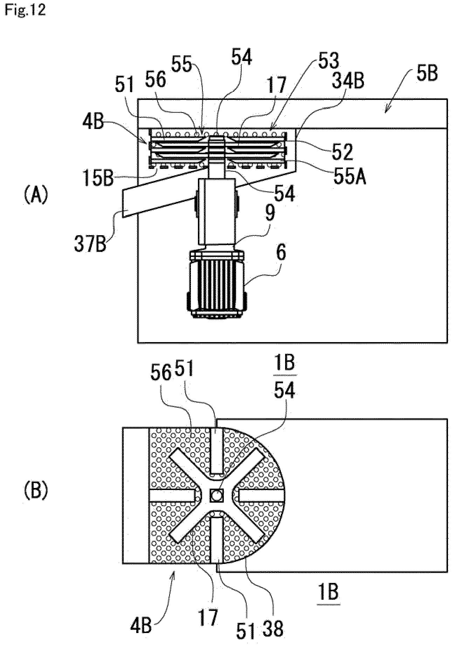

Fig. 12(A) is a schematic side view for describing a modification when a rotary body in another example of the food separating device to which the present invention is applied is a single unit, and Fig. 12(B) is a schematic plane view for describing a modification when a rotary body in another example of the food separating device to which the present invention is applied is a single unit.

Here, in the crusher part 4B, the housing wall part 52 of a cylindrical shape is arranged below along the discharge port 38 of the frozen minced meat clump housing part 5B. Moreover, the rotary body 53 is arranged approximately horizontally inside the housing wall part 52, and below the rotary body 53, the receiving plate part 15B is arranged.

Further, the rotary body 53 is configured such that the rotation shaft 54 is directly connected vertically to the drive shaft 9 of the electric motor 6 arranged below the receiving plate part 15B.

The rotation shaft 54 is inserted in a loosely penetrating manner into an approximate center portion of the receiving plate part 15B, and the height of the upper end of the rotation shaft 54 is set at approximately the same height as the housing wall part 52.

Configuration is such that the blade members (55, 55A) configured by the blade plate parts 17 projected approximately horizontally are arranged at the upper and lower positions of the rotation shaft 54 having such a configuration.

Moreover, configuration is such that on the inner circumferential surface of the housing wall part 52, an auxiliary blade plate part 51 is projected, between the blade plate parts 17 of the blade members (55, 55A), to overlap each other on the same plane as the blade plate parts 17.

Here, configuration is such that a plurality of punching holes 56 are provided on the receiving plate part 15B and the housing wall part 52.

The inner diameter of the punching holes 56 is approximately two times the height from the receiving plate part 15B to the blade member 55A, in the case of the receiving plate part 15B. Further, in the case of the housing wall part 52, configuration is such that the inner diameter is approximately two times a distance from the distal end of the blade plate part 17 of the blade members (55, 55A) to the housing wall part 52.

Specifically, when the distance between the blade plate parts 17 of the blade members (55, 55A) and the distance between the receiving plate part 15B and the blade plate parts 17 of the blade member 55A are 10 mm, the inner diameter of the punching holes 56 of the receiving plate part 15B is approximately 20 mm.

Further, when a distance between the distal end of the blade plate part 17 of the blade members (55, 55A) and the housing wall part 52 is 10 mm, the inner diameter of the punching holes 56 of the housing wall part 52 is approximately 20 mm.

Further, the cover part 34B is arranged to surround the receiving plate part 15B and the housing wall part 52. The cover part 34B is arranged to have an interval of 10 mm or more with the receiving plate part 15B and the housing wall part 52, and below the receiving plate part 15B, the inclined separated-meat discharge port 37B is formed.

Configuration is such that when the cover part 34B having such a configuration is arranged, the minced meat separated by the rotary body 53 is not scattered from the punching holes 56 of the receiving plate part 15B and the housing wall part 52.

In the food separating device 1B of the present invention, a minced meat clump (not shown) frozen at, for example, around -10°C is housed in the frozen minced meat clump housing part 5B.

In such a state, when the electric motor 6 is driven, the blade members (55, 55A) projected from the rotation shaft 54 are rotated in the same direction.

While the rotary body 53 is thus driven and rotated, the minced meat clump housed in the frozen minced meat clump housing part 5B is fed into the housing wall part 52.

The minced meat clump dropped into the housing wall part 52 is broken up as a result of the blade plate part 17 of the rotary body 53 being rotated relative to the auxiliary blade plate part 51 projected from the inner circumferential surface of the housing wall part 52.

Here, the broken up minced meat clump is pushed out, at a thickness of about 10 mm, onto the receiving plate part 15B and housing wall part 52 surfaces because the distance between the auxiliary blade plate part 51 and the blade plate part 17 of the rotary body 53 is about 10 mm.

Moreover, a separated meat (not shown) pushed out onto the receiving plate part 15B and housing wall part 52 surfaces is divided into pieces having a length of about 10 mm by gaps between the blade plate parts 17 of the rotary body 53, and the receiving plate part 15B and the housing wall part 52.

The separated meat thus divided is discharged into the cover part 34B through the punching holes 56 arranged on the receiving plate part 15B and the housing wall part 52. Moreover, the separated meat discharged into the cover part 34B is collected into a collection container (not shown) from the separated-meat discharge port 37B for refreezing.

In the food separating device 1B of the present invention having such a configuration, when a minced meat clump in a frozen state is sequentially fed onto the rotary body, it is possible to continuously divide the fed clump into a separated state.

Further, when the rotary body is installed horizontally, it is possible to realize reduction in size of a whole device.

Further, it is possible to automatically break up in a short period of time, and thus, it is possible to separate a food while the food is frozen and it is not necessary to newly provide a freezing means, resulting in an effectively separated food.

Further, when the auxiliary blade plate part is arranged, it is possible to ensure that the minced meat clump in a frozen state is divided into pieces.

It is noted that in <Second Embodiment> and <Modification of Second Embodiment>, the plurality of punching holes are provided on the housing wall part surface; however, it may not be necessary to provide the punching holes.

However, it is desirable to provide the punching holes in view of an advantage that when the separated meat pushed out onto between the distal end of the blade plate part and the housing wall part is discharged through the punching holes, it is possible for the blade plate part to smoothly rotate.

Further, in <Second Embodiment> and <Modification of Second Embodiment>, the inner diameter of the punching holes of the receiving plate part is approximately two times the height from the receiving plate part to the blade member; however, it may not be necessary to increase by approximately two times.

However, when the inner diameter is larger than the maximum length of the broken up separated meat, there is an advantage that it is possible to smoothly discharge the separated meat, and in this sense, it is desirable to make the inner diameter of the punching holes of the receiving plate part approximately two times the height from the receiving plate part to the blade member.

Further, in <Second Embodiment> and <Modification of Second Embodiment>, the inner diameter of the punching holes of the housing wall part is approximately two times the distance from the distal end of the blade member to the housing wall part; however, it may not be necessary to increase by approximately two times.

However, when the inner diameter is larger than the maximum length of the broken up separated meat, there is an advantage that it is possible to smoothly discharge the separated meat, and in this sense, it is desirable to make the inner diameter of the punching holes of the receiving plate part approximately two times the distance from the distal end of the blade member to the housing wall part.

Further, in the second embodiment, the blade member projected from the forward rotation shaft and the blade member projected from the backward rotation shaft are rotated in the respective opposite direction; however, it may not be necessary to rotate in the respective opposite direction.

For example, the plurality of blade members may rotate in the same direction; however, it is desirable that the blade members are rotated in the respective opposite direction in view of an advantage that it is possible to smoothly break up the minced meat clump in a frozen state.

### <Third Embodiment>

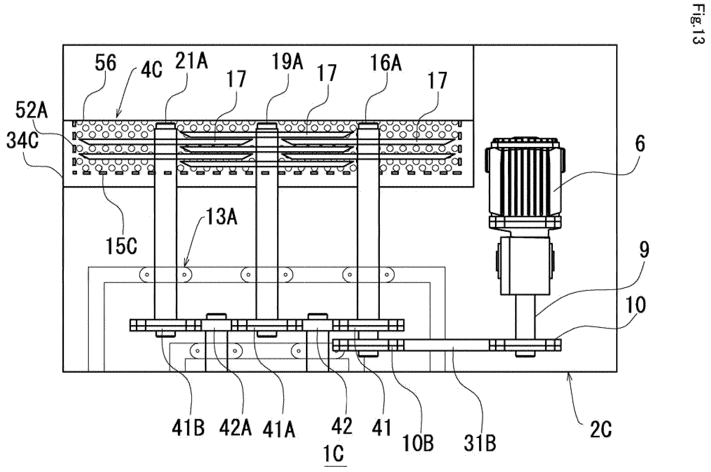

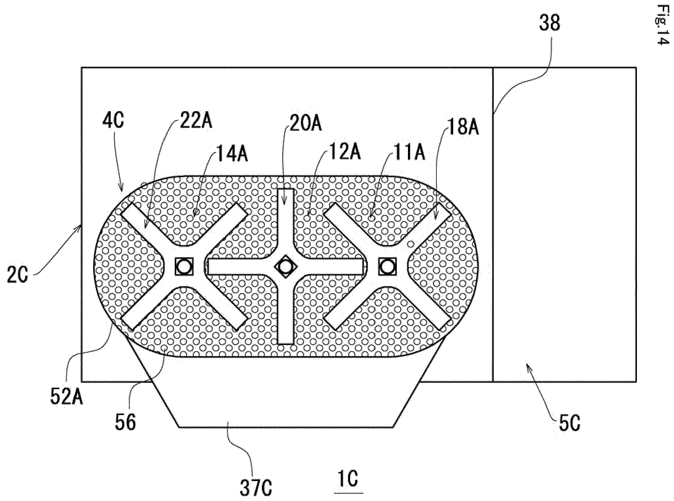

Fig. 13 is a schematic side view for describing one example obtained when there are a plurality of rotary bodies in another example of the food separating device to which the present invention is applied, and Fig. 14 is a schematic plane view for describing one example obtained when there are a plurality of rotary bodies in another example of the food separating device to which the present invention is applied.

A food separating device 1C shown here is configured by a base 2C, the electric motor 6 mounted on the base 2C, a frozen minced meat clump housing part 5C arranged at an upper end of the base 2C, and a crusher part 4C arranged adjacently to the frozen minced meat clump housing part 5C.

Here, in the crusher part 4C, a housing wall part 52A of an elliptical shape is arranged below along the discharge port 38 of the frozen minced meat clump housing part 5C. Moreover, a first rotary body 11A, a second rotary body 12A, and a third rotary body 14A are arranged approximately horizontally inside the housing wall part 52A. Below the first rotary body 11A, the second rotary body 12A, and the third rotary body 14A, a receiving plate part 15C is arranged.

The first rotary body a is configured such that a first blade member 18A configured by the blade plate part 17 having a thickness of approximately 6 mm and being arranged to cross in the direction horizontal to the first rotation shaft 16A vertically erected is attached at intervals of approximately 20 mm.

Further, in the second rotary body 12A, a second rotation shaft 19A is arranged at approximately parallel to the first rotation shaft 16. Moreover, a second blade member 20A is arranged which is configured by the blade plate part 17 having a thickness of approximately 6 mm and being arranged to cross in the direction horizontal to the second rotation shaft 19A.

Configuration is such that the second blade members 20A are attached at intervals of approximately 20 mm to be shifted relative to the position of the first blade members 18A along a longitudinal direction of the second rotation shaft 19A so that the second blade members 20A cross on the same plane as the first blade members 18A.

Further, in the third rotary body 14A, a third rotation shaft 21A is arranged adjacently and approximately parallel to the second rotation shaft 19A. Moreover, a third blade member 22A is arranged which is configured by the blade plate part 17 having a thickness of approximately 6 mm and being provided to cross in the direction horizontal to the third rotation shaft 21A.

Configuration is such that the third blade members 22A are attached at intervals of approximately 20 mm to be shifted relative to the position of the second blade members 20A along a longitudinal direction of the third rotation shaft 21A so that the third blade members 22A cross on the same plane as the second blade members 20A.

With such a configuration, the blade plate parts 17 of the first blade member 18A and the second blade member 20A rotate to cross each other on the same plane. Further, the blade plate parts 17 of the second blade member 20A and the third blade member 22A rotate to overlap each other on the same plane.

Further, the first rotation shaft 16A, the second rotation shaft 19A, and the third rotation shaft 21A, which are inserted in a loosely penetrating manner into the receiving plate part 15C, are axially supported rotatably by the bearing 13A of which the lower ends are attached to the base 2C.

Moreover, while lower ends of the first rotation shaft 16A, the second rotation shaft 19A, and the third rotation shaft 21A are inserted through the bearing 13A, the distal ends thereof are attached with spur gears (41, 41A, 41B).

Further, configuration is such that the slave spur gear 42 is meshed between the spur gear 41 and the spur gear 41A, and a slave spur gear 42A is meshed between the spur gear 41A and the spur gear 41B.

Moreover, configuration is such that the slave spur gear 42 is meshed between the spur gear 41 and the spur gear 41A, and the slave spur gear 42A is meshed between the spur gear 41A and the spur gear 41B.

Configuration is such that when the first rotation shaft 16 having such a configuration is attached with the pulley 10B in an integrated manner for driving and rotating the spur gear 41, the pulley 10B and the pulley 10 attached to the drive shaft 9 of the electric motor 6 are linked with the interlocking belt 31B.

Thus, when the pulley 10B is driven and rotated, the first rotation shaft 16A, the second rotation shaft 19A, and the third rotation shaft 21A are rotated in the same direction.

Further, configuration is such that a plurality of punching holes 56 are provided on the receiving plate part 15C and the housing wall part 52A.

Configuration is such that the inner diameter of the punching holes 56 is approximately two times the height from the receiving plate part 15C to the blade member 55A, in the case of the receiving plate part 15B, and in the case of the housing wall part 52A, the inner diameter is approximately two times a distance from the distal end of the blade members (55, 55A) to the housing wall part 52A.

Specifically, when the distance between the blade plate parts 17 and the distance between the receiving plate part 15C and the blade plate part 17 are 10 mm, the inner diameter of the punching holes 56 of the receiving plate part 15C is approximately 20 mm.

Further, when the distance between the distal end of the blade plate part 17 and the housing wall part 52A is 10 mm, the inner diameter of the punching holes 56 of the housing wall part 52A is approximately 20 mm.

Further, a cover part 34C is arranged to surround the receiving plate part 15C and the housing wall part 52A. The cover part 34C is arranged to have an interval of 10 mm or more with the receiving plate part 15C and the housing wall part 52A, and below the receiving plate part 15C, an inclined separated-meat discharge port 37C is formed.

Configuration is such that when the cover part 34C having such a configuration is arranged, the minced meat separated by the first rotary body 11A, the second rotary body 12A, and the third rotary body 14A is not scattered from the punching holes 56 of the receiving plate part 15C and the housing wall part 52A.

In the food separating device 1C of the present invention, a minced meat clump (not shown) frozen at, for example, around -10°C is housed in the frozen minced meat clump housing part 5C.

In such a state, the electric motor 6 is driven to rotate the first rotary body 11A, the second rotary body 12A, and the third rotary body 14A in the same direction.

In this way, while the first rotary body 11A, the second rotary body 12A, and the third rotary body 14A are driven and rotated, the minced meat clump housed in the frozen minced meat clump housing part 5C is fed into the housing wall part 52A.

The minced meat clump dropped into the housing wall part 52A is broken up as a result of the blade plate parts 17 of the first rotary body 11A, the second rotary body 12A, and the third rotary body 14A being rotated to cross each other on the same planes at intervals of approximately 10 mm.

Here, the broken up minced meat clump is pushed out, at a thickness of about 10 mm, onto the receiving plate part 15C and housing wall part 52A surfaces.

Moreover, a separated meat (not shown) pushed out onto the receiving plate part 15C and housing wall part 52A sides is divided into pieces having a length of about 10 mm by gaps between the blade plate parts 17 of the first rotary body 11A, the second rotary body 12A, and the third rotary body 14A, and the receiving plate part 15C and the housing wall part 52A.

The separated meat thus divided is discharged into the cover part 34C through the punching holes 56 arranged on the receiving plate part 15C and the housing wall part 52A. Moreover, the separated meat discharged into the cover part 34C is collected into a collection container (not shown) from the separated-meat discharge port 37C for refreezing.

In the food separating device 1C of the present invention having such a configuration, when a minced meat clump in a frozen state is sequentially fed onto the rotary body, it is possible to continuously divide the fed clump into a separated state.

Further, when the first rotary body, the second rotary body, and the third rotary body are installed horizontally, it is possible to realize reduction in size of a whole device.

Further, it is possible to automatically break up in a short period of time, and thus, it is possible to separate a food while the food is frozen and it is not necessary to newly provide a freezing means, resulting in an effectively separated food.

It is noted that in the third embodiment, the first rotary body, the second rotary body, and the third rotary body are rotated in the same direction; however, these bodies may not necessarily be rotated in the same direction.

For example, configuration may be such that the first rotary body and the second rotary body are rotated in the respective opposite direction, and the second rotary body and the third rotary body are rotated in the respective opposite direction.

### <Fourth Embodiment>

Next, an example of a separated food producing method by using the food separating device to which the present invention is applied will be described in detail, below.

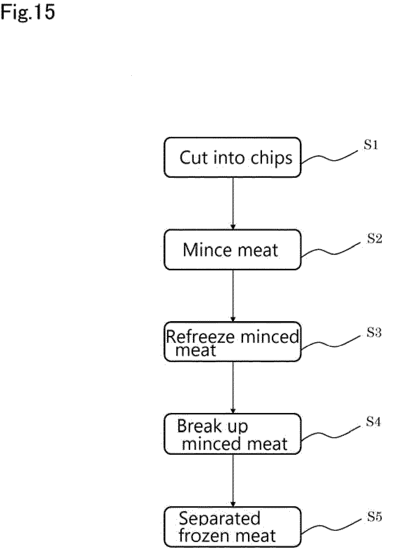

Fig. 15 is a flowchart for describing one example of steps in the separated food producing method to which the present invention is applied.

First, a meat clump such as beef or pork frozen and preserved at about -20°C in a freezer is cut by a flaker into chips (see step S1).

Subsequently, the frozen meat in chips is fed into a mincer to obtain minced meat. In this case, the temperature of the meat to be minced by a mincer rises to about -2°C due to friction and the meat is changed to a clay state (see step S2).

The minced meat in this state is again placed in the freezer and left frozen to -10°C or less (see step S3).

As a result, it is possible to maintain a frozen state of the minced meat in which the small pieces do not strongly adhere to each other while the water molecules between the small pieces remain as ice.

Here, as shown in Fig. 5, the minced frozen meat in a clump frozen at -10°C or less is taken out from the freezer, and is divided by a spatula at the frozen minced meat clump housing part 5 into pieces having a size capable of being fed into a feeding port 35 of a cover part 34 (see step S4).

Subsequently, the divided frozen minced meat clump is dropped from the feeding port 35 between the first rotary body 11, the second rotary body 12, and the third rotary body 14. Thus, the blade plate parts 17 of the first rotary body 11, the second rotary body 12, and the third rotary body 14 are rotated to cross on the same plane, whereby the frozen minced meat clump is broken up into a separated state.

Moreover, the broken up minced meat clump is pushed out onto the receiving plate part 15 at a thickness of about 6 mm from between the blade plate parts 17 of the first rotary body 11, the second rotary body 12, and the third rotary body 14. The pushed-out minced meat is divided into pieces having a length of about 10 mm by gaps between the blade plate parts 17 of the first rotary body 11, the second rotary body 12, and the third rotary body 14, and the receiving plate part 15 (step S5).

Thus, the minced meat in a frozen state is converted into a separated frozen meat having a diameter of about 6 mm and a length of about 10 mm.

### <Fifth Embodiment>

First, as shown in the above Fig. 15, a meat clump such as beef or pork frozen and preserved at about -20°C in a freezer is cut by a flaker into chips (see step S1).

Subsequently, the frozen meat in chips is fed into a mincer to obtain minced meat.

In this case, the temperature of the meat to be minced by a mincer rises to about -2°C due to friction and the meat is changed to a clay state (see step S2).

The minced meat in this state is again placed in the freezer and left frozen to -10°C or less (see step S3).

As a result, it is possible to maintain a frozen state of the minced meat in which the small pieces do not strongly adhere to each other while the water molecules between the small pieces remain as ice.

Here, as shown in Fig. 6 to Fig. 7, the minced frozen meat in a clump frozen at -10°C or less is taken out from the freezer, and is divided by a spatula at the frozen minced meat clump housing part 5B into pieces having a size capable of being fed into the housing wall part 52 (see step S4).

Subsequently, the divided frozen minced meat clump is dropped onto the rotary body 53 from an opening end of the housing wall part 52. Thus, the frozen minced meat clump is broken up into a separated state as a result of the blade members (55, 55A) of the rotary body 53 being rotated in the respective opposite direction.

Moreover, the broken up minced meat clump is pushed out onto the receiving plate part 15B and the housing wall part 52 by the blade plate part 17 of the blade members (55, 55A) of the rotary body 53. The pushed-out minced meat is divided into pieces having a length of about 10 mm when passing through the punching holes 56 formed on the receiving plate part 15B and the housing wall part 52, and pushed out into the cover part 34B (see step S5).

Thus, the minced meat in a frozen state is converted into a separated frozen meat having a diameter of about 6 mm and a length of about 10 mm.

In the separated food producing method of the present invention having the above configuration, it is possible to produce a separated minced meat in a frozen state by feeding the frozen minced meat into the food separating device.

It is noted that in <Fourth Embodiment> and <Fifth Embodiment>, the minced meat is refrozen at -10°C or less; however, the minced meat may not necessarily be frozen at -10°C or less.

However, in view of the friction heat generated when the minced meat is broken up in the food separating device, the minced meat may be thawed out into a clay shape at around -2°C, and thus, it is necessary to maintain the minced meat at least at around -4°C and it is thus desirable to maintain the minced meat at -10°C or less.

### [Reference Signs List]

1, 1A, 1B, 1C Separating device
2, 2A, 2B, 2C Base
3 Drive part
4, 4A, 4B, 4C Crusher part
5, 5A, 5B, 5C Frozen minced meat clump housing part
6 Electric motor
7 Caster
8 Control part
9 Drive shaft
10, 10A, 10B Pulley
11, 11A First rotary body
12, 12A Second rotary body
13,13A Bearing
14, 14A Third rotary body
15, 15A, 15B, 15C Receiving plate part
16, 16A First rotation shaft
17 Blade plate part
18, 18A First blade member
19, 19A Second rotation shaft
20, 20A Second blade member
21, 21A Third rotation shaft
22, 22A Third blade member
23 Support frame
26, 26A, 26B Master bevel gear
27 Interlocking shaft
28, 28A, 28B Slave bevel gear
29 Universal joint
30 Rotation shaft
31, 31A, 31B Interlocking belt
33, 33A Vibrator
34, 34A, 34B, 34C Cover part
35 Feeding port
36 Lid part
37, 37A, 37B, 37C Separated-meat discharge port
38 Discharge port
39 Frame
40 Support frame
41, 41A, 41B Spur gear
42, 42A Slave spur gear
43 Angle member
44 Upper end
45 Opening part
46 Linkage member
47 Long hole
48 Angle adjustment plate part
49 Distal end part
50 Support member
51 Auxiliary blade plate part
52, 52A Housing wall part
53 Rotary body
54 Rotation shaft
55, 55A Blade member
56 Punching hole
57 Forward and backward rotation gear part
58, 58A, 58B, 58C Planetary gear
59 Forward rotation shaft
60 Reverse rotation shaft
61 Through-hole
62 Butterfly nut member
63 Fixed blade part

## Claims

1. A food separating device, comprising:
a first rotary body which is capable of rotating around a first rotation shaft and which has a first blade member protruding from the first rotation shaft;
a second rotary body which is capable of rotating around a second rotation shaft approximately parallel to the first rotation shaft and which has a second blade member that crosses on the same plane as the first blade member protruding from the second rotation shaft; and
a receiving plate part which is arranged below the first rotary body and the second rotary body and which has a predetermined interspace with distal end parts of the first blade member and the second blade member of the first rotary body and the second rotary body.

2. The food separating device according to claim 1, wherein the receiving plate part is inclined downward from the first rotary body toward the second rotary body.

3. The food separating device according to claim 2, wherein the receiving plate part has a constant interspace with distal ends of the first blade member and the second blade member of the first rotary body and the second rotary body.

4. The food separating device according to claim 1, claim 2, or claim 3, comprising a vibrator part for vibrating the receiving plate part.

5. The food separating device according to claim 1, claim 2, claim 3, or claim 4, comprising a third rotary body which is capable of rotating in the same direction as the second rotary body around a third rotation shaft adjacent and approximately parallel to the second rotation shaft and which has a third blade member that crosses on the same plane as the second blade member protruding from the second rotation shaft.

6. A food separating device, comprising:
a rotary body which is capable of rotating around a rotation shaft and which has a blade member protruding approximately horizontally from the rotation shaft;
a receiving plate part which has an area larger than a rotation area of which the radius is a length from the rotation shaft to a distal end of the blade member and which has a plurality of punching holes and is arranged below the rotary body, with a predetermined interspace, approximately parallel to the blade member; and
a housing wall part erected at least at the same height as a height from the receiving plate part to the blade member, along a circumferential edge portion of the receiving plate part.

7. The food separating device according to claim 6, wherein the housing wall part has a plurality of punching holes on a surface of the housing wall part.

8. The food separating device according to claim 6, wherein an inner diameter of the punching holes of the receiving plate part is set approximately two times the height from the receiving plate part to the blade member.

9. The food separating device according to claim 7, wherein an inner diameter of the punching holes of the housing wall part is set approximately two times a distance from the distal end of the blade member to the housing wall part.

10. A food separating device, comprising:
a first rotary body which is capable of rotating around a first rotation shaft and which has a first blade member protruding approximately horizontally from the first rotation shaft;
a second rotary body which is capable of rotating around a second rotation shaft approximately parallel to the first rotation shaft and which has a second blade member that crosses on the same plane as the first blade member protruding from the second rotation shaft;
a receiving plate part which has an area larger than a first rotation area of which the radius is a length from the first rotation shaft to a distal end of the first blade member and a second rotation area of which the radius is a length from the second rotation shaft to a distal end of the second blade member, and which has a plurality of punching holes and is arranged, with a predetermined interspace, below the first rotary body and the second rotary body, approximately parallel to the first blade member and the second blade member; and
a housing wall part erected at least at the same height as a height from the receiving plate part to the first blade member and the second blade member, along a circumferential edge portion of the receiving plate part.

11. A separated food producing method, comprising:
a step of cutting a clump of frozen meat into chips to obtain a minced meat;
a step of refreezing the minced meat; and
a step of feeding the frozen minced meat into between a first rotary body and a second rotary body of a food separating device comprising: the first rotary body which is capable of rotating around a first rotation shaft and which has a first blade member protruding from the first rotation shaft; the second rotary body which is capable of rotating around a second rotation shaft approximately parallel to the first rotation shaft and which has a second blade member that crosses on the same plane as the first blade member protruding from the second rotation shaft; and a receiving plate part which is arranged below the first rotary body and the second rotary body and which has a predetermined interspace with distal end parts of the first blade member and the second blade member of the first rotary body and the second rotary body, whereby the fed minced meat is divided into a separated state.

12. A separated food producing method, comprising:
a step of cutting a clump of frozen meat into chips to obtain a minced meat;
a step of refreezing the minced meat;
a step of feeding the frozen minced meat into a rotary body of a food separating device comprising: the rotary body which is capable of rotating around a rotation shaft and which has a blade member protruding approximately horizontally from the rotation shaft; a receiving plate part which has an area larger than a rotation area of which the radius is a length from the rotation shaft to a distal end of the blade member and which has a plurality of punching holes and is arranged below the rotary body, with a predetermined interspace, approximately parallel to the blade member; and a housing wall part erected at least at the same height as a height from the receiving plate part to the blade member, along a circumferential edge portion of the receiving plate part, whereby the fed minced meat is divided into a separated state;
and a step of discharging the minced meat divided into a separated state by the blade member of the rotary body, from a plurality of punching holes of the receiving plate part.

13. The separated food producing method according to claim 11 or claim 12, wherein the minced meat is refrozen at -10°C or less.
